(19) Europäisches Patentamt
European Patent Office
Office européen des brevets

(11) **EP 3 047 554 B1**

(12) **EUROPÄISCHE PATENTSCHRIFT**

(45) Veröffentlichungstag und Bekanntmachung des Hinweises auf die Patenterteilung:
**12.09.2018   Patentblatt 2018/37**

(51) Int Cl.:
*H02J 3/14* *(2006.01)*       *H02J 3/38* *(2006.01)*

(21) Anmeldenummer: **14738856.5**

(86) Internationale Anmeldenummer:
**PCT/EP2014/065122**

(22) Anmeldetag: **15.07.2014**

(87) Internationale Veröffentlichungsnummer:
**WO 2015/039780 (26.03.2015 Gazette 2015/12)**

(54) **VERFAHREN ZUM STEUERN EINES LEISTUNGSVERBRAUCHS EINER GRUPPE MEHRERER WINDENERGIEANLAGEN**

METHOD FOR CONTROLLING A POWER CONSUMPTION OF A GROUP OF A PLURALITY OF WIND TURBINES

PROCÉDÉ DE COMMANDE D'UNE CONSOMMATION DE PUISSANCE D'UN GROUPE DE PLUSIEURS ÉOLIENNES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **20.09.2013   DE 102013219002**

(43) Veröffentlichungstag der Anmeldung:
**27.07.2016   Patentblatt 2016/30**

(73) Patentinhaber: **Wobben Properties GmbH**
**26607 Aurich (DE)**

(72) Erfinder: **GIERTZ, Helge**
**26789 Leer (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
**EP-A1- 2 166 225     DE-A1- 19 842 043**

**Beschreibung**

Die vorliegende Erfindung betrifft ein Verfahren zum Steuern eines Leistungsverbrauchs einer Gruppe mehrerer Windenergieanlagen, insbesondere eines Windparks. Weiterhin betrifft die vorliegende Erfindung eine Gruppe mehrerer Windenergieanlagen, insbesondere einen Windpark.

Windenergieanlagen und insbesondere Windparks sind nicht nur Energieproduzenten, sondern können auch zu großen Energiekonsumenten werden. Dieser Eigenschaftswechsel findet in der Regel bei allen Windenergieanlagen in einer Region zum selben Zeitpunkt statt, da die meisten großen Energieverbraucher in einer Windenergieanlage wetterbedingt zugeschaltet werden müssen. Dies betrifft insbesondere große thermische Verbraucher, die die Betriebsbereitschaft der Windenergieanlagen wiederherstellen oder erhalten sollen. Solche Verbraucher können bspw. eine Blattheizung oder eine Generatortrocknung sein, um nur zwei Beispiele zu nennen. Es kommen Weitere in Betracht.

Für den Netzbetreiber des elektrischen Versorgungsnetzes, an den diese Windenergieanlagen angeschlossen sind, stellt der beschriebene Umstand mitunter ein großes Problem innerhalb von Regionen dar. Diese erheblichen Lastflussänderungen sind nicht oder schwer kalkulierbar bzw. vorhersehbar und müssen somit durch teure Reserven gedeckt werden.

Diese so entstandenen Mehrkosten werden dann an den Betreiber der Windenergieanlagen, insbesondere des Windparks durchgereicht.

Üblicherweise sind Windenergieanlagen in ihrer Betriebsführung autark und steuern auch die Bezugsleistung, was auch als Management der Bezugsleistung bezeichnet werden kann. Unter Bezugsleistung ist hierbei die Leistung zu verstehen, die die Windenergieanlage für den geschilderten oder anderen Verbrauch bezieht, also konsumiert und nicht produziert. Hierbei gibt es große thermische Verbraucher, die zwingend notwendig betrieben werden müssen, um die Betriebsbereitschaft der Windenergieanlage wiederherzustellen oder sie aufrechtzuerhalten. Erschwerend kommt oftmals hinzu, dass die Windenergieanlage in der Regel in dieser Situation keine Energie produzieren kann oder nicht produzieren darf.

Werden bspw. die Windenergieanlagen eines Windparks mit einer Blattheizung zur Enteisung der Blätter betrieben, werden in der Regel alle Anlagen zum selben Zeitpunkt die Energieproduktion einstellen und den Betrieb der Enteisung starten. Dies liegt insbesondere daran begründet, dass eine solche Vereisung der Rotorblätter an demselben Standort praktisch zeitgleich auftreten wird. Hierdurch entsteht eine sehr große Bezugsleistung des Windparks, die somit eine maximal erlaubte bzw. verhandelte Bezugsleistung überschreitet und dadurch immense Mehrkosten verursacht. Eine solche maximal erlaubte bzw. verhandelte Bezugsleistung ist eine solche, die der Windpark ohne oder ohne besonders hohe Kosten aus dem elektrischen Versorgungsnetz beziehen kann, um z.B. den Windpark zu starten. Es ist zwar grundsätzlich möglich, mehr Leistung als diese verhandelte Bezugsleistung aus dem elektrischen Versorgungsnetz zu entnehmen, eine solche überschreitende Leistung muss aber zu einem sehr hohen Tarif vergütet werden.

Ein weiteres Problem ist, dass bei dem Verbrauch von Leistung evtl. Energie verschwendet wird. Wird bspw. für eine Region oder einen Windpark eine längere Flaute prognostiziert, braucht eine Enteisung der Blätter nicht zu erfolgen, bevor es Aussicht auf Wind gibt. Umgekehrt können bei der Vorhersage von Wind, ohne Rücksicht auf die Bezugsleistung, alle Anlagen auf einmal enteist werden. Hierbei entsteht möglicherweise ein hoher Preis für die bezogene Leistung, der sich aber ggf. dadurch rechtfertigt, dass ein Stillstand der Windenergieanlage bei dem erwarteten Wind vermieden wird. Die bezogene Leistung kann somit ggf. recht bald wieder erwirtschaftet werden.

Das Deutsche Patent- und Markenamt hat in der Prioritätsanmeldung zu vorliegender PCT-Anmeldung folgenden Stand der Technik recherchiert: EP 2 166 225 A1 und DE 195 02 786 A1.

Die DE 198 42 043 A1 beschreibt ein Verfahren zum Steuern von elektrischen Geräten, die jeweils einen elektrischen Verbraucher und eine zugeordnete Steuerungseinrichtung aufweisen. Aus der ermittelten Leistungsaufnahme und einem zur Verfügung stehenden Leistungsrestbetrag schalten die Steuerungseinrichtungen gemäß einer Wichtigkeitsskala einzelne Verbraucher zu oder ab. Bei Erreichen einer Grenze für die zulässige Leistungsaufnahme wird ein weiteres Gerät nur dann zugeschaltet, wenn ein Gerät mit einer niedrigeren Wichtigkeit abgeschaltet werden kann.

Die EP 2166225 A1 betrifft einen Windpark mit mehreren Windenergieanlagen, die eine Energieversorgung für Hilfsaggregate aufweisen. Der Energiebedarf der Hilfsaggregate wird überwacht, und die Hilfsaggregate werden dementsprechend angesteuert, um zu verhindern, dass eine vorgegebene maximale Leistungsaufnahme überschritten wird.

Der vorliegenden Erfindung liegt somit die Aufgabe zugrunde, zumindest eines der o.g. Probleme zu adressieren. Insbesondere soll eine Lösung geschaffen werden, bei der Bezugsleistung möglichst effizient und zu möglichst geringen Kosten bezogen und eingesetzt wird. Zumindest soll eine zu bisher bekannten Verfahren alternative Lösung vorgeschlagen werden.

Erfindungsgemäß wird ein Verfahren gemäß Anspruch 1 vorgeschlagen. Dieses Verfahren geht aus von einer Gruppe mehrerer Windenergieanlagen, die bspw. alle an einen Netzverknüpfungspunkt oder Netzanschlusspunkt an das elektrische Versorgungsnetz angeschlossen sind. Diese Windenergieanlagen dieser Gruppe können Teil eines Windparks sein, oder die Gruppe, und damit ihre Windenergieanlagen, können den Windpark bilden, es kommen aber auch andere Konstellationen der Gruppe in Betracht. Ein häufiger Fall dürfte hierbei tatsächlich ein Windpark sein, der diese Gruppe bildet und insoweit wird auch nachfolgend häufig auf einen Windpark Bezug genommen. All solche Erläuterungen zu einem Windpark sind gleichwohl auch auf eine Gruppe von Windenergieanlagen anwendbar, die nicht unbedingt einen Windpark bilden, es sei denn dies ist in der Beschreibung ausdrücklich anders angegeben.

Den Windenergieanlagen dieser Gruppe wird somit nach und nach in einem Zyklus eine Angebotsleistung zum Verbrauch angeboten. Hierbei werden die Windenergieanlagen zunächst in einer vorgegeben Reihenfolge geordnet. In dieser Reihenfolge werden diese Windenergieanlagen, wie nachfolgend beschrieben wird, im Grunde nacheinander abgearbeitet. Diese vorgegebene Reihenfolge kann bspw. auch abhängig von Randbedingungen, insbesondere Umweltbedingungen wie der Richtung abhängen. Bspw. kann die erste Windenergieanlage in dieser vorgegebenen Reihenfolge diejenige sein, die bezogen auf den aktuellen Wind auch vorne steht. Sie ist dann im Grunde hierbei die wichtigste Windenergieanlage und erhält auch in ihrer Behandlung die oberste Priorität, wie nachfolgend noch erläutert wird.

Diese Reihenfolge kann aber auch geändert werden, insbesondere wenn sich in dem o.g. Beispiel die Windrichtung ändert. Es kommen aber auch andere Kriterien in Betracht, wie bspw. die Windenergieanlagengröße, sofern diese innerhalb der Gruppe überhaupt unterschiedlich ist. Muss eine Windenergieanlage bspw. aus Gründen der Schallreduzierung oder aus anderen Gründen gegenüber anderen Windenergieanlagen gedrosselt betrieben werden, kann diese in der vorgegebenen Reihenfolge weiter hinten oder ganz hinten angeordnet sein. Die Windenergieanlagen dieser betrachteten Gruppe werden somit in dem Zyklus in der vorgegeben Reihenfolge sukzessive abgearbeitet. Dabei wird den Windenergieanlagen, nämlich beginnend mit der ersten Windenergieanlage der Reihenfolge, jeweils eine Angebotsleistung zum Verbraucher angeboten. Die betreffende Windenergieanlage, also zunächst die erste Windenergieanlage, reserviert sich diese oder eine geringere Angebotsleistung als Bezugsleistung. Dabei kann dann zunächst der Einfachheit halber davon ausgegangen werden, dass die Windenergieanlage diese reservierte Bezugsleistung auch tatsächlich bezieht und verbraucht. Bspw. stellt das Anlagenmanagement der betreffenden Windenergieanlage fest, dass Beheizen der Rotorblätter zum Enteisen und das Beheizen des Generators zum Trocknen nötig ist. Dieses Management kennt die entsprechenden Leistungswerte für diese Heizvorrichtungen und reserviert von der angebotenen Angebotsleistung eben diese benötigte Leistung, also für die Blattheizung und die Generatorheizung, als reservierte Bezugsleistung. Die Windenergieanlage kann dann diese Leistung beziehen und entsprechend die Rotorblätter und die Generatoren beheizen.

Nachfolgenden Windenergieanlagen, also zunächst einmal der zweiten Windenergieanlage in der Reihenfolge, kann und wird dann die um diese bereits reservierte Bezugsleistung reduzierte Parkverbrauchsleistung angeboten.

Die Parkverbrauchsleistung setzt sich aus einer vorbestimmten, aus dem elektrischen Versorgungsnetz zum Entnehmen vereinbarten Entnahmeleistung und einer innerhalb des Windparks oder der Gruppe der Windenergieanlagen durch Erzeugung und/oder aus Speichern verfügbaren Parkleistung zusammen. Im einfachsten Fall, wenn der Windpark oder die Gruppe der Windenergieanlagen keine Leistung erzeugt und auch keine Energie gespeichert hat, entspricht die Parkverbrauchsleistung der vereinbarten Entnahmeleistung. Die Entnahmeleistung ist insoweit insbesondere eine Leistung, die mit dem Betreiber des elektrischen Versorgungsnetzes vereinbart, aus dem elektrischen Versorgungsnetz entnommen werden darf, nämlich insgesamt von der Gruppe bzw. des Parks entnommen werden darf. Für diese Entnahmeleistung ist insbesondere nur eine geringe Vergütung gegenüber dem Netzbetreiber, also dem Betreiber des elektrischen Versorgungsnetzes vorgesehen.

Diese Parkverbrauchsleistung begrenzt somit im Grunde den maximalen Wert der Leistung, die einer Windenergieanlage angeboten werden kann. Dabei wird zunächst der ersten Windenergieanlage ausgehend von dieser Parkverbrauchsleistung eine Angebotsleistung angeboten. Maximal entspricht diese Angebotsleistung der Parkverbrauchsleistung. Häufig wird aber weniger angeboten, wie noch erläutert wird.

Die erste Windenergieanlage kann nun diese angebotene Angebotsleistung in der vollen angebotenen Höhe als Bezugsleistung reservieren, oder sie kann weniger Bezugsleistung reservieren, ggf. gar keine Bezugsleistung.

Der nächsten Windenergieanlage wird maximal eine Angebotsleistung in Höhe der Parkverbrauchsleistung abzüglich bereits von vorstehenden Windenergieanlagen reservierten Bezugsleistungen als Angebotsleistung angeboten. Bei der zweiten Windenergieanlage wird also die von der ersten Windenergieanlage reservierte Bezugsleistung abgezogen. Bei der dritten Windenergieanlage, soweit vorhanden, wird die reservierte Bezugsleistung der ersten Windenergieanlagen und die reservierte Bezugsleistung der zweiten Windenergieanlage von der potentiell verfügbaren Leistung abgezogen und so weiter.

Das Verfahren schlägt somit eine Priorisierung vor, die dafür sorgt, dass der Bedarf der ersten Windenergieanlage möglichst gedeckt wird. Die nachfolgenden Windenergieanlagen können dann möglicherweise nicht mehr genug Bezugsleistung beziehen, wenn die erste, oder weitere vorstehende Windenergieanlagen, nicht genügend Leistung übrig lassen. Insoweit beziehen sich vorstehende Windenergieanlagen auf die vorgegebene Reihenfolge, in der die Windenergieanlagen in dem Zyklus abgearbeitet werden.

Vorzugsweise wird jeweils im aktuellen Zyklus die der jeweiligen Windenergieanlage angebotene Angebotsleistung aus einer aktuellen, verfügbaren Bezugsleistung zuzüglich der von dieser Windenergieanlage im vorigen Zyklus reservierten Bezugsleistung berechnet. Es wird also in jedem Zyklus und dort in jedem Schritt, also bei der Abarbeitung jeder einzelnen Windenergieanlage, immer wieder neu eine verfügbare Bezugsleistung zugrundegelegt. Diese verfügbare Bezugsleistung kann in einem Zyklus von einer zur nächsten Windenergieanlage ggf. auch unverändert bleiben. Jedenfalls bildet diese verfügbare Bezugsleistung die Grundlage und ihre Berechnung wird nachfolgend noch erläutert.

Dem liegt auch die Überlegung zugrunde, dass der aktuellen Windenergieanlage zumindest die Leistung angeboten werden kann, die sie bereits im vorigen Zyklus reserviert hat. Ist darüber hinaus noch Leistung verfügbar, kann der aktuellen Windenergieanlage diese zusätzlich angeboten werden. Die Berechnung der verfügbaren Bezugsleisung wird vorzugsweise für die erste Windenergieanlage grundsätzlich anders vorgenommen, als für die weiteren Windenergieanlagen, wobei sich dies immer auf die vorgegebene Reihenfolge der Windenergieanlage bezieht.

Vorzugsweise wird die verfügbare Bezugsleistung für die erste Windenergieanlage aus der Parkverbrauchsleistung abzüglich einer aktuellen Parkbezugsleistung berechnet. Es wird also die oben erläuterte Parkverbrauchsleistung zugrundegelegt, nämlich die vereinbarte Entnahmeleistung und ggf. zuzüglich erzeugter oder aus Speichern verfügbarer Leistung. Von dieser Parkverbrauchsleistung wird die von der Gruppe bzw. des Windparks aktuell aus dem elektrischen Versorgungsnetz entnommene Parkbezugsleistung abgezogen.

Die aktuell entnommene Parkbezugsleistung kann gemessen werden. Alternativ kann statt der aktuell entnommenen (gemessenen) Parkbezugsleistung die Summe der reservierten Bezugsleistungen der Gruppe verwendet und entsprechend von der Parkverbrauchsleistung abgezogen werden. Diese Summe der reservierten Bezugsleistungen kann der entnommenen Parkbezugsleistung etwa entsprechen, insbesondere dann, wenn der Park keine Parkleistung erzeugt oder aus Speichern zur Verfügung stellen kann.

Das sind zwei Varianten, die verfügbare Bezugsleistung für die erste Windenergieanlage zu berechnen. Im einfachsten Fall liegt keine erzeugte oder aus Speichern erhältliche Leistung vor und die Parkverbrauchsleistung entspricht dann der vereinbarten, nämlich maximal vereinbarten, Entnahmeleistung. Diese Entnahmeleistung kann dann der verfügbaren Bezugsleistung entsprechen, wenn bisher keinerlei Bezugsleistung aus dem Netz entnommen wird. Haben die Windenergieanlagen, zumindest eine von Ihnen, aber eine Bezugsleistung reserviert und entnehmen diese auch, reduziert sich die verfügbare Bezugsleistung um diesen Wert, nämlich um die Leistung, die von allen Windenergieanlagen der Gruppe zusammen entnommen werden. Entsprechend wird für die erste Windenergieanlage die verfügbare Bezugsleistung berechnet, nämlich aus der Parkverbrauchsleistung abzüglich der aktuell insgesamt aus dem Netz entnommenen Parkbezugsleistung der Gruppe oder des Parks.

Somit ist zunächst für die erste Windenergieanlage eine verfügbare Bezugsleistung bestimmt worden. Vorzugsweise wird diese nun für die Bestimmung der Bezugsleistung der nachfolgenden Windenergieanlagen, also zunächst für die zweite Windenergieanlage, zugrundegelegt. Dabei wird diese verfügbare Bezugsleistung für eine nachfolgende Windenergieanlage reduziert, wenn die aktuelle Windenergieanlage ihre reservierte Bezugsleistung gegenüber dem vorigen Zyklus erhöht hat. Für die Berechnung der zweiten Windenergieanlage wird also die verfügbare Bezugsleistung der ersten Windenergieanlage, für die zweite Windenergieanlage, reduziert, wenn die erste Windenergieanlage, ihre reservierte Bezugsleistung gegenüber dem vorigen Zyklus erhöht hat.

Dem liegt nämlich der Gedanke zugrunde, dass zu Beginn jedes Zyklus die verfügbare Bezugsleistung aus der Parkverbrauchsleistung abzüglich der aktuell bezogenen Parkbezugsleistung neu berechnet wird. Dies ist die für die erste Windenergieanlage verfügbare Bezugsleistung. Erhöht die erste Windenergieanlage nun ihre reservierte Bezugsleistung, und damit auch die von ihr tatsächlich entnommene Bezugsleistung, verringert sich die zunächst berechnete verfügbare Bezugsleistung um diesen Wert und der nachfolgenden Windenergieanlage, also zunächst der zweiten Windenergieanlage, steht entsprechend eine reduzierte verfügbare Bezugsleistung zur Verfügung.

Verringert sich aber die von der ersten Windenergieanlage reservierte Bezugsleistung, stände der nachfolgenden Windenergieanlage eine entsprechend größere verfügbare Bezugsleistung zur Verfügung. Es wird aber vorgeschlagen, in diesem Fall der nachfolgenden Windenergieanlage nicht eine erhöhte Bezugsleistung zur Verfügung zu stellen. Stattdessen wird vorgeschlagen, die verfügbare Bezugsleistung unverändert zu lassen, wenn die erste Windenergieanlage, bzw. eine andere vorstehende Windenergieanlage, weniger Bezugsleistung reserviert, als sie in dem vorigen Zyklus reserviert hat. Damit wird erreicht, dass hierdurch zusätzliche verfügbare Bezugsleistung, also wieder freigegebene Bezugsleistung, nicht an in der vorgebebenen Reihenfolge weiter hinten stehenden Windenergieanlagen weitergegeben wird. In einem Zyklus wieder frei werdende Bezugsleistung soll also zunächst nicht an Windenergieanlagen geringerer Priorität gegeben werden.

Erst in einem neuen Zyklus kann eine solche freigegebene Leistung, oder solche freigegebenen Leistungen auch an weiter hinten stehende Windenergieanlagen weitergegeben werden. Wird nämlich Bezugsleistung innerhalb eines Zyklus frei, weil eine Windenergieanlage weniger Bezugsleistung reserviert, als im Zyklus zuvor, wird entsprechend weniger Bezugsleistung aus dem Netz bezogen und dies wirkt sich dann am Anfang des nächsten Zyklus aus, nämlich wenn die verfügbare Bezugsleistung für die erste Windenergieanlage neu berechnet wird. Hier wird dann bei der Berechnung der verfügbaren Bezugsleistung von der Parkverbrauchsleistung die aus dem Netz entnommene Parkbezugsleistung abgezogen, es wird also weniger Parkbezugsleistung abgezogen, als im Zyklus zuvor. Es erhöht sich dadurch die verfügbare Bezugsleistung im ersten Schritt des Zyklus, nämlich für die erste Windenergieanlage. Diese erste Windenergieanlage kann nun vor allen anderen entscheiden, ob sie entsprechend mehr Bezugsleistung reservieren möchte. Nur wenn diese erste Windenergieanlage das nicht reservieren möchte, oder nur einen Teil davon reservieren möchte, steht diese freigewordene Bezugsleistung anderen, weiter hinten stehenden Windenergieanlagen zur Verfügung. Es wird hierdurch also eine Priorisierung erreicht, die frei werdende Bezugsleistung zunächst der ersten Windenergieanlage anbietet und erst weiteren anbietet, wenn die erste Windenergieanlage diese nicht benötigt. Die Versorgung der ersten Windenergieanlage steht hierdurch an erster Stelle.

Vorzugsweise wird die vorgegebene Reihenfolge, in der der Zyklus eine Windenergieanlage nach der anderen bearbeitet, in Abhängigkeit einer oder mehrerer Randbedingungen bestimmt oder verändert. Die Reihenfolge ist insoweit flexibel einstellbar und änderbar, wobei eine einmal vorgegebene Reihenfolge nicht sofort wieder geändert werden sollte, sondern für viele Zyklen, insbesondere über mehrere Stunden beibehalten wird. Dies kann sich oftmals bereits aus einer länger gleichbleibenden Randbedingung ergeben. Eine Randbedingung kann die Windrichtung sein. In diesem Fall kann es sinnvoll sein, die zum Wind gewandte und insoweit vorderste Windenergieanlage mit der ersten Priorität zu versehen, diese also in der Reihenfolge an erster Stelle zu stellen. Soll bspw. die Gruppe von Windenergieanlagen, insbesondere der Windpark nach einer Flaute bei ansteigendem Wind wieder starten, während möglicherweise eine Vereisung vorliegt, würde somit vorgeschlagen werden, zunächst die vordere Windenergieanlage mit soviel Bezugsleistung zu versorgen wie sie benötigt, aber innerhalb der vorgegebenen Grenzen, und damit eine Enteisung zunächst an erster Stelle für diese Windenergieanlage zu ermöglichen. Diese Windenergieanlage kann dann alsbald starten und dann Leistung erzeugen, die mitunter schnell weiter über der Leistung liegt, die aus dem Netz bezogen werden kann, die also weit über der vereinbarten zu entnehmenden Bezugsleistung liegt.

Benötigt diese Windenergieanlage Bezugsleistung zum Enteisen und zum Trocknen des Generators und ist das Trocknen vor dem Enteisen abgeschlossen, um nur ein vereinfachtes Beispiel zu nennen, kann die zum Trocknen benötigte Bezugsleistung bereits früher für andere Windenergieanlagen wieder freigegeben werden.

Es kommen aber auch andere Randbedingungen in Betracht, wie auch bspw. auf Erfahrungswerten beruhend, demnach eine Windenergieanlage leichter oder stärker vereist. Diese könnte dann in der Reihenfolge weiter hinten stehen, weil eine weniger vereisende Windenergieanlage, was von der lokalen Topographie abhängen kann, schneller enteist werden kann und dann für die weiteren Anlagen die benötigte Leistung zum Enteisen, um bei diesem Beispiel zu bleiben, liefern kann. Dieser Effekt kann auch von der Windrichtung und/oder Eigenschaften der Luft abhängen, insbesondere der Luftfeuchtigkeit.

Vorzugsweise wird vorgeschlagen, dass die aus dem elektrischen Versorgungsnetz zu entnehmende Entnahmeleistung auf einen Wert festgesetzt wird, der der Summe aller möglichen Verbrauchsleistungen der Windenergieanlage der Gruppe entspricht, die die größte Summe aller möglichen Verbrauchsleistungen aufweist.

Durch das Verfahren zum Steuern des Leistungsverbrauchs einer Gruppe mehrerer Windenergieanlagen wird eine solche Priorisierung vorgesehen, dass zumindest eine Windenergieanlage mit ausreichend Bezugsleistung versehen wird. Dabei kann mit dem Verfahren erreicht werden, dass die ausreichende Versorgung der prioritätsersten Windenergieanlage mit Bezugsleistung auch bei nur vergleichsweise wenig verfügbarer Bezugsleistung erreicht werden kann. Es kann hierfür ausreichen, soviel Bezugsleistung bereitzustellen, wie lediglich eine Windenergieanlage benötigt. Sofern die Windenergieanlagen unterschiedlich sind, sollte sich dies an der Windenergieanlage orientieren, die die meiste Bezugsleistung benötigt, also die meiste Leistung verbraucht, wenn alle entsprechenden Verbraucher zugleich benötigt werden. Wobei hier sinnvollerweise nur die Summe der Verbraucher zugrundegelegt wird, die vernünftigerweise oder technisch sinnvollerweise auch zugleich betrieben werden können.

Dadurch ist entsprechend erreichbar, dass eine möglichst geringe Entnahmeleistung zwischen der Gruppe der Windenergieanlagen, insbesondere einem Windpark und einem Netzbetreiber vereinbart wird. Dies kann für den Parkbetreiber bedeuten, dass er günstige Bedingungen aushandeln kann und dies kann für den Netzbetreiber bedeuten, dass er nur wenig Bezugsleistung bereitstellen muss, also nur mit wenig Bezugsleistung kalkulieren muss. Das wiederum kann die Netzstabilität verbessern und/oder den Netzbetreiber von dem aufwändigen Bereitstellen solcher Leistung mitunter zumindest teilweise zu befreien.

Gemäß einer weiteren Ausführungsform wird vorgeschlagen, dass die reservierte Bezugsleistung wenigstens einer der Windenergieanlagen reduziert wird, wenn die Summe der reservierten Leistungen des vorigen Zyklus größer ist als die Parkverbrauchsleistung.

Eine solche Situation kann insbesondere auch dann auftreten, wenn den Windenergieanlagen viel Angebotsleistung angeboten werden konnte, weil innerhalb des Parks auch noch eine Leistungserzeugung vorhanden war und diese Leistung verwendet werden konnte. Fällt nun diese Leistungserzeugung weg oder reduziert sie sich, kann es zu dem beschriebenen Fall kommen und in diesem Fall wird im Grunde in der Reihenfolge von hinten beginnend den Windenergieanlagen Leistung wieder weggenommen, bis die erste Windenergieanlage genug Leistung hat.

Eine solche Situation kann auch dann auftreten, wenn sich die zu entnehmende Entnahmeleistung, die nämlich insbesondere mit dem Netzbetreiber vereinbart wurde, reduziert, Dies kann beispielsweise durch eine entsprechende vorherige, zeitliche Vereinbarung bedingt sein.

Vorzugsweise wird eine Reduzierung bereits reservierter Bezugsleistung dadurch vorgenommen, dass der Zyklus zum Anbieten der Angebotsleistung nun in entgegengesetzter Reihenfolge durchlaufen wird. Es wird also der in der Reihenfolge ganz hinten stehenden Windenergieanlage zuerst Leistung weggenommen und wenn dies nicht ausreicht der vorletzten usw. Hierdurch kann sukzessive verfügbare Bezugsleistung für die erste Windenergieanlage beschafft werden. Die Priorisierung der ersten Windenergieanlage wird bei der Bezugsleistungsvergabe somit beibehalten.

Vorzugsweise wird die jeweils reservierte Bezugsleistung von der betreffenden Windenergieanlage zum Beheizen ihrer Rotorblätter eingesetzt. Außerdem oder alternativ wird sie zum Beheizen ihres Generators eingesetzt. Das Beheizen des Generators erfolgt um Kondenswasser zu entfernen, also den Generator im Grunde zu trocken bzw. sicherzustellen, dass er trocken ist. Außerdem oder alternativ kann die reservierte Bezugsleistung bzw. ein Teil davon zum Starten der Windenergieanlage verwendet werden. Dies betrifft insbesondere das Ansteuern eines oder mehrerer Azimutmotoren, um die Windenergieanlage in den Wind zu stellen. Außerdem oder alternativ betrifft es das Ansteuern von sog. Pitchmotoren, die die Rotorblätter in den entsprechenden Winkel zum Wind drehen, was auch als Pitchen bezeichnet wird. In vergleichsweise geringem Maße kann das Bereitstellen von Leistung zum Starten der Windenergieanlage auch das Versorgen von Steuereinrichtungen einschließlich Steuercomputern betreffen. Ggf. kann Leistung auch zum Enteisen eines Gondelanemometers verwendet werden.

Vorzugsweise wird der Zyklus in einem Zeitbereich von einer halben Minute bis zu fünf Minuten, vorzugsweise in einem Zeitbereich von einer bis drei Minuten und insbesondere etwa jede Minute wiederholt. Diese Festlegung der Zykluswiederholung im Bereich von einer halben Minute bis fünf Minuten lässt dem Zyklus genügend Zeit, sämtliche in der Zeit zu abzufragenden Windenergieanlagen abzufragen und ihnen entsprechende Angebotsleistung anzubieten. In dieser Zeit braucht zunächst nur die entsprechende Leistung von einem Zentralrechner angeboten bzw. von der jeweiligen Steuerung der einzelnen Windenergieanlage reserviert zu werden. Insoweit ist es ein informationstechnischer Prozess, bei dem die Leistung noch nicht tatsächlich abgefragt und verwendet werden muss. Tatsächlich können die Windenergieanlagen aber unmittelbar beginnen, die reservierte Leistung auch zu beziehen.

Die genannten Minutenbereiche liegen auch in der Größenordnung, in der häufig ein Enteisen eines Rotorblattes und/oder ein Trocknen eines Generators und/oder ein Enteisen eines Anemometers durchgeführt werden kann.

Außerdem oder alternativ wird gemäß einer Ausführungsform vorgeschlagen, dass der Zyklus manuell unterbrochen werden kann und im Falle einer solchen manuellen Unterbrechung eine Vergabe der Bezugsleistung für jede Windenergieanlage manuell erfolgen kann. Dies kann bspw. dann der Fall sein, wenn Servicepersonal vor Ort ist oder dies kann auch über eine Fernwartung vorgenommen werden.

Nach Ende einer solchen manuellen Unterbrechung kann der Zyklus bei der ersten Windenergieanlage starten. Das Berechnen der angebotenen Angebotsleistung erfolgt zumindest gemäß einigen Ausführungsformen, wie oben beschrieben wurde, für die erste Windenergieanlage ohne Verwertung von angebotenen oder reservierten Werten des vorigen Zyklus, sondern basierend auf der tatsächlich aus dem elektrischen Versorgungsnetz bezogenen Bezugsleistung. Insoweit ist nach dem Unterbrechen eines Zyklus der Neustart eines Zyklus ohne weiteres möglich und vorherige Werte brauchen nicht berücksichtigt und/oder zwischengespeichert zu werden.

Gemäß einer Ausführungsform wird zudem vorgeschlagen, dass wenigstens einer der nachfolgend genannten Werte konstant gehalten wird, sollte es eine Kommunikationsstörung zwischen den Windenergieanlagen der Gruppe oder des Windparks geben. Dies kann das Beibehalten der reservierten Bezugsleistungen der Windenergieanlagen der Gruppe betreffen. Dies kann außerdem oder alternativ auch die Parkverbrauchsleistung und/oder die aktuelle Parkbezugsleistung betreffen. Vorzugsweise erfolgt dies für eine vorbestimmte Übergangszeit. Wird diese Übergangszeit überschritten, kann es sinnvoll sein andere Maßnahmen einzuleiten, einschließlich der manuellen Übernahme des Vorgangs.

Erfindungsgemäß wird zudem eine Gruppe mehrerer Windenergieanlagen, insbesondere ein Windpark vorgeschlagen, die dazu vorbereitet ist, ein Verfahren gemäß wenigstens einer der vorbeschriebenen Ausführungsformen durchzuführen.

Vorzugsweise weist diese Gruppe zum Ausführen des Verfahrens eine zentrale Steuereinheit, insbesondere eine Parksteuereinheit auf. Hierzu kann auch eine vorhandene Parksteuereinheit verwendet und entsprechend angepasst werden. Insbesondere sollte die Parksteuereinheit die vereinbarte Bezugsleistung der Höhe nach kennen, und sie sollte messtechnischen Zugriff auf die jeweils aktuell bezogene Leistung aus dem Netz haben bzw. auf solche Messwerte. Außerdem sollte die zentrale Steuereinheit über eine Kommunikation mit den Windenergieanlagen verfügen.

Die Erfindung wird nun nachfolgend exemplarisch und unter Bezugnahme auf die begleitenden Figuren näher erläutert.

Figur 1 zeigt schematisch eine Windenergieanlage.

Figur 2 zeigt schematisch einen Windpark.

Figur 3 zeigt ein Ablaufdiagramm zum Verteilen von Bezugsleistung.

Figuren 4a bis 4f zeigen einen exemplarischen Verlauf der Aufteilung von Bezugsleistung für den Fall einer festen Entnahmeleistung.

Figuren 5a bis 5f zeigen einen exemplarischen Verlauf der Aufteilung von Bezugsleistung für den Fall einer variablen Entnahmeleistung.

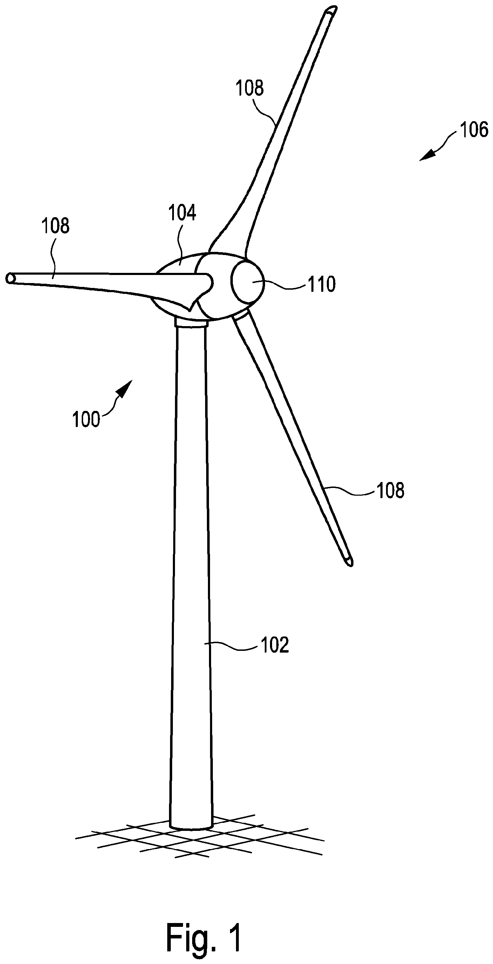

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

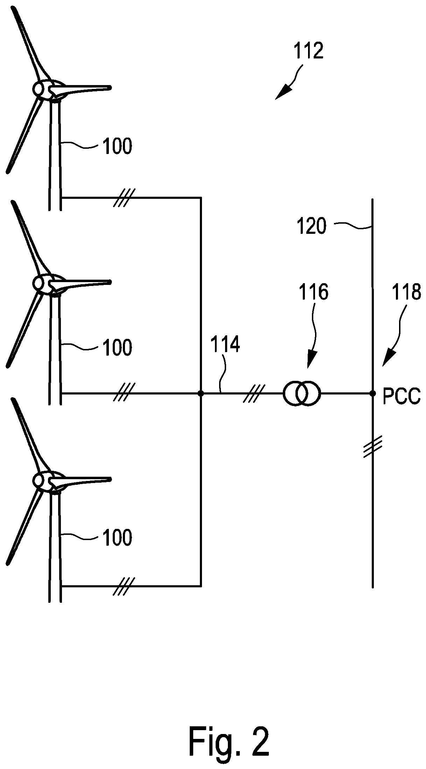

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, in dem beispielsweise auch ein Transformator am Ausgang jeder Windenergieanlage 100 vorhanden ist, um nur ein anderes Ausführungsbeispiel zu nennen.

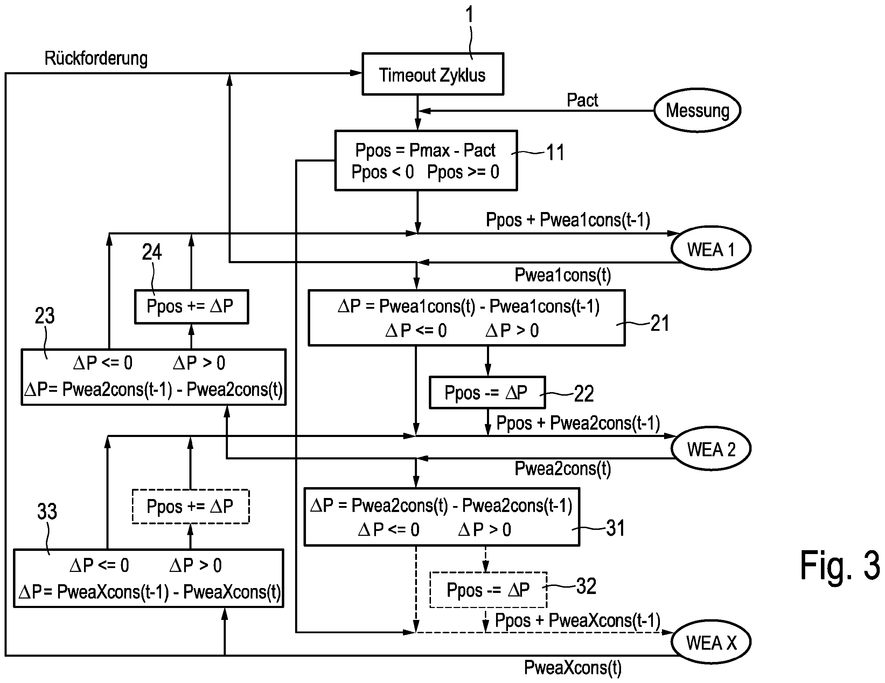

Figur 3 zeigt einen Ablauf für die Verteilung von Bezugsleistung. Dabei ist in einem rechten bzw. mittleren Bereich der Ablauf gezeigt, in dem Angebotsleistung angeboten und entsprechend Bezugsleistung reserviert wird. In einem linken Teil, der mit "Rückforderung" gekennzeichnet ist, ist ein Ablauf gezeigt, der reservierte Bezugsleistung von Windenergieanlagen wieder zurückfordert. In dem Schema werden die folgenden Variablen verwendet:

- Ppos: Mögliche zur Verfügung stehende Bezugsleistung. Dies bezeichnet die Bezugsleistung, die in dem betreffenden Schritt im Ablauf und damit im Zyklus der jeweiligen Anlage zuzüglich ihrer bereits zuvor reservierten Leistung angeboten werden kann.

- Pmax: Maximale Bezugsleistung, nämlich die maximale Leistung, die absprachegemäß für alle betroffenen Windenergieanlagen zusammen aus dem elektrischen Versorgungsnetz entnommen werden dürfen. Sie wurde auch als aus dem elektrischen Versorgungsnetz zum Entnehmen vereinbarte Entnahmeleistung beschrieben. Diese Maximale Bezugsleistung ist in dem gezeigten Beispiel in Figur 3 identisch mit der Parkverbrauchsleistung, weil in dieser Darstellung Leistungen die die Windenergieanlagen erzeugen bzw. aus den Speichern entnehmen könnten, nicht berücksichtigt werden, also den Wert 0 haben.

- Pact: Aktuelle Leitung Netzanschlusspunkt (NAP). Das ist diejenige Leistung, die am Netzanschlusspunkt, und damit für alle betroffenen Windenergieanlagen zusammen, dem elektrischen Versorgungsnetz entnommen wird. Sie stellt insoweit auch einen Istwert bzw. einen Messwert dar. Optional bzw. vereinfachend wird Pact als Summe der im vorigen Zyklus von allen Windenergieanlagen reservierten Bezugsleistungen gebildet.

- PweaXcons(t): Bezugsleistung der Anlage X, also der jeweils betrachteten Anlage aus dem aktuellen Zyklus.

- PweaXcons(t-1): Bezugsleistung der Anlage X, also der jeweils betrachteten Anlage aus dem vorigen Zyklus. Diese beiden Werte PweaXcons(t) und PweaXcons(t-1) bezeichnen somit die Bezugsleistung, die die betreffende Anlage tatsächlich reserviert hat und insbesondere auch tatsächlich verbraucht. Dabei ist "X" ein Platzhalter für eine Zahl, die die Nummer der betreffenden Windenergieanlage in dem Zyklus bzw. der vorbestimmten Reihenfolge angibt.

- ΔP: Differenz der (reservierten) Bezugsleistung einer Windenergieanlage zwischen zwei Zyklen.

Ein Zyklus startet im Block 1 "Timeout Zyklus". Im Anschluss daran wird zunächst die aktuelle Leistung Pact am Netzanschlusspunkt gemessen. Im Block 11 wird die mögliche zur Verfügung stehende Bezugsleistung berechnet, nämlich aus der wie vereinbart maximal zu beziehenden Bezugsleistung Pmax abzüglich der tatsächlich aktuell entnommenen Leistung Pact. Ergibt sich hierbei ein Wert für Ppos, der größer oder gleich 0 ist, wird der Windenergieanlage als Angebotsleistung die Leistung Ppos zuzüglich der reservierten Bezugsleistung dieser Windenergieanlage aus dem vorigen Zyklus angeboten, es wird als Ppos+Pwea1cons(t-1) angeboten. **[0053]** Ist allerdings die zur Verfügung stehende Bezugsleistung Ppos kleiner als 0, wird in dem Ablauf nach unten abgezweigt und der später beschriebene Ablauf der Rückforderung kann gestartet werden.

Ist die zur Verfügung stehende Bezugsleistung Ppos aber positiv oder zumindest 0, wird der ersten Windenergieanlage diese zusammen mit der im letzten Zyklus reservierten Bezugsleistung angeboten und die Windenergieanlage 1, die als WEA 1 bezeichnet wird, reserviert in dem Rahmen eine reservierte Bezugsleistung, nämlich Pwea1cons(t). Dieser Wert wird auch für die Berechnung einer Angebotsleistung für die zweite Windenergieanlage WEA 2 benutzt.

Im Block 21 wird nun zunächst überprüft, ob sich die Bezugsleistung der ersten Windenergieanlage verringert hat oder nicht. Hierzu wird die Differenz der Bezugsleistung ΔP entsprechend berechnet:

$$\Delta P = Pwea1cons(t) - Pwea1cons(t-1).$$

Ist ΔP größer als 0, hat die vorige, nämlich im Block 21 erste Windenergieanlage ihre reservierte Bezugsleistung also erhöht, wird die zur Verfügung stehende Bezugsleistung Ppos reduziert, nämlich um diesen Wert ΔP:

$$Ppos = Ppos - \Delta P.$$

Dies zeigt Block 22.

Nun wird der zweiten Windenergieanlage die Angebotsleistung in Höhe der zur Verfügung stehenden Bezugsleistung Ppos zuzüglich der von der zweiten Windenergieanlage im letzten Zyklus reservierten Bezugsleistung Pwea2cons(t-1) angeboten. Die zweite Windenergieanlage WEA 2 kann nun eine Bezugsleistung in dieser Höhe reservieren, oder sie kann eine geringe Bezugsleistung reservieren, nämlich die aktuell reservierte Bezugsleistung Pwea2cons(t) der zweiten Windenergieanlage WEA2.

Basierend auf den Werten für die reservierte Bezugsleistung der zweiten Windenergieanlage des vorigen Zyklus und des jetzigen Zyklus wird im Block 31 geprüft, ob sich die reservierte Bezugsleistung der zweiten Windenergieanlage WEA 2 erhöht oder verringert hat. Ggf. wird ein neuer, nämlich geringerer Wert für die zur Verfügung stehende Bezugsleistung Ppos im Block 32 analog zur Berechnung in Block 22 bestimmt. Hierauf basierend wird dann für die nächste Windenergieanlage, die hier repräsentativ für jegliche weitere Windenergieanlagen als X-te Windenergieanlage WEA X bezeichnet wird, ein Ppos berechnet und darauf basierend eine Angebotsleistung angeboten.

Beim Durchlaufen des Zyklus wird nach und nach jeder Windenergieanlage 1 bis X eine Angebotsleistung angeboten und davon wird ggf. eine Bezugsleistung reserviert.

Jeder Windenergieanlage 1 bis X ist somit in diesem Zyklus eine Angebotsleistung angeboten worden und entsprechend in dem Rahmen von der betreffenden Windenergieanlage eine Bezugsleistung reserviert worden. Dabei wurde so vorgegangen, dass die erste Windenergieanlage priorisiert ist und danach folgende Windenergieanlagen ebenfalls gemäß ihre Position in der Reihenfolge priorisiert sind.

Stellt sich aber heraus, dass mehr Leistung bezogen als reserviert wird, ergibt sich im Block 11 für die mögliche zur Verfügung stehende Bezugsleistung Ppos ein negativer Wert. Entsprechend wird von dem Block 11 aus direkt ganz nach unten verzweigt und der letzten Windenergieanlage dieser negative Wert der zur Verfügung stehenden Bezugsleistung zuzüglich der Bezugsleistung angeboten, die diese X-te Windenergieanlage im letzten Zyklus reserviert hatte. Es wird also Ppos+PweaXcons(t-1) der X-ten Windenergieanlage angeboten. Dieser Wert ist somit kleiner als der im letzten Zyklus reservierte Bezugsleistungswert PweaXcons(t-1), weil die mögliche zur Verfügung stehende Bezugsleistung Ppos einen negativen Wert hat. In diesem Rahmen kann die Windenergieanlage X eine Bezugsleistung PweaXcons(t) reservieren, nämlich weniger als im vorigen Zyklus. Im Block 33 wird dann geprüft, ob und um wieviel die Windenergieanlage X weniger Bezugsleistung reserviert hat, als im vorigen Zyklus. Die mögliche zur Verfügung stehende Bezugsleistung Ppos wird dann um diesen Differenzwert der Bezugsleistung der Windenergieanlage X zwischen zwei Zyklen im Block 34 erhöht:

$$Ppos = Ppos + \Delta P.$$

Das kann bspw. bedeuten, dass sich im Block 11 für Ppos ein negativer Wert von bspw. 4kW ergeben hat. Reduziert sich die reservierte Bezugsleistung der Windenergieanlage X um 2kW, weil sie zuvor 2kW reserviert hatte und nun keine Bezugsleistung mehr reserviert hat, beträgt der Wert für die Differenz der Bezugsleistung ΔP im Block 33 +2kW und Ppos erhöht sich im Block 34 um 2kW, nämlich von minus 4kW auf minus 2kW. Für weitere Windenergieanlagen kann die mögliche zur Verfügung stehende Bezugsleistung Ppos weiter erhöht werden, indem Windenergieanlagen weniger reservierte Bezugsleistung zugestanden wird bzw. ihnen reservierte Bezugsleistung weggenommen wird. Exemplarisch ist das noch in den Blöcken 23 und 24 gezeigt, die analog den Blöcken 33 und 34 entsprechen, allerdings für die Windenergieanlage 2.

Nach dem Ausgang der Blöcke 23 und 24 kann schließlich der ersten Windenergieanlage WEA 1 der hierdurch hoffentlich zumindest auf 0 erhöhte Wert für Ppos der Windenergieanlage 1 zuzüglich der von ihr im vorigen Zyklus reservierten Bezugsleistung Pwea1cons(t-1) als Angebotsleistung angeboten werden. Hiernach endet der Zyklus und beginnt erneut im Block 1. Wird keine reservierte Bezugsleistung zurückgefordert, werden die Blöcke 33, 34, 23 und 24 nicht verwendet und der Zyklus kehrt am Ende der Windenergieanlage X zum Block 1 zurück und der Zyklus beginnt nach entsprechend festgelegter Zeit erneut.

Ergänzend wird hierzu allgemein noch das Folgende erläutert.

Das Bezugsleistungsmanagement für Windenergieanlagen, nachfolgend auch als WEA bezeichnet, arbeitet gruppenorientiert. Gruppen sind selektiv ausgewählte Windenergieanlagen, die z.B. alle an einem Netzverknüpfungspunkt angeschlossen sind. Die Verarbeitung erfolgt zyklisch (z.B. alle 1 min.).

Am Anfang jedes Zyklus wird die noch zur Verfügung stehende Bezugsleistung ermittelt (Ppos=Pmax-Pact). Diese hierfür benötigte aktuell bezogene Leistung (Pact) kann durch eine installierte Messung am Netzverknüpfungspunkt oder durch Bildung der Summe aller reservierter Bezugsleistungen bereitgestellt werden, und ist der Minimalwert (Maximale Bezugsleistungswert) über den Bezugsleistungsmanagementzyklus.

Alle Windenergieanlagen der Gruppe werden mit der ihr zur Verfügung stehenden Bezugsleistung (Ppos+PweaXcons(t-1)) der Reihe nach angerufen. Diese Bezugsleistung bildet sich durch die gesamte zur Verfügung stehende Bezugsleistung (Ppos) und der reservierten Leistung (PweaXcons(t-1)) der jeweiligen Anlage des vorherigen Zyklus (Leistung die schon reserviert wurde und im Augenblick konsumiert wird).

Wird Leistung in der Windenergieanlage benötigt und reicht die zur Verfügung stehende Leistung aus, kann die Anlage seine benötigte Leistung übernehmen. Als Quittung sendet die Anlage ihre aktuelle gesamt Bezugsleistung (PweaXcons(t)) zurück.

Hat eine Anlage weiter Bezugsleistung übernommen (ΔP>0), wird für die Folgeanlage die zur Verfügung stehende Bezugsleistung korrigiert (Ppos-=ΔP). Wurde Leistung wieder frei gegeben, wird diese in diesem Zyklus ignoriert.

Durch das Ignorieren der freigegeben Bezugsleistung einer Anlage wird das Prioritätenmanagement im System gebildet, da den folgenden Anlagen in der Zyklusreihenfolge diese freigegebene Leistung nicht angeboten wird. Erst im nächsten Zyklus kann diese Leistung wieder verbucht werden. Somit haben Anlagen die vorne in der Anfrageliste stehen eher die Möglichkeit Leistungen zu reservieren.

Wird mehr Leistung bezogen als reserviert, muss die reservierte Bezugsleistung von den Anlagen weggenommen werden. Dieses ist der Fall wenn die maximale Bezugsleistung (Pmax) kleiner wird, d.h. ein kleinerer Sollwert vorgegeben wird. Bei dieser Ausnahme wird die Zwangsrücknahme der Bezugsleistung nach der Prioritätenliste durchgeführt. Anlagen mit der niedrigeren Priorität müssen ihre Leistung als erstes abgeben. Die Anrufreihenfolge der Anlagen ist für diese Zyklen umgekehrt und die freigegebene Bezugsleistung kann sofort wieder verbucht werden.

Wichtig ist für die Güte des Systems ein synchroner Betrieb zwischen Anlage und Bezugsleistungsmanagement. Die Anlage darf die Bezugsleistung nur nach Freigabe durch das Management abrufen. Auch das Abschalten von Bezugsleistung sollte relativ synchron laufen. Ansonsten stimmt die Energiebilanz nicht.

Bei den gemeldeten Bezugsleistungen der Anlagen (PweaXcons) handelt es sich um Maximalwerte die eine Anlage in den jeweiligen Situationen beziehen könnte. Z.B. würde bei der Blattheizung einer Anlage die Leistung des Heizregisters und die des Heizlüfters reserviert werden, auch wenn z.Z. nur der Lüfter läuft. Somit wir der autarke Betrieb von Peripherien einer Anlagen sichergestellt.

Durch die gemeldeten max. Bezugsleistungen der Anlagen und der max. gemessenen Bezugsleistung am NAP wird sichergestellt, dass die gesamte Bezugsleistung am NAP nicht überschritten wird und dass relativ autarkes Management der Anlagen erhalten bleibt. Ein punktgenaues Ausregeln der Bezugsleistung am NAP, was technisch schwer umsetzbar ist, wird hierdurch vermieden.

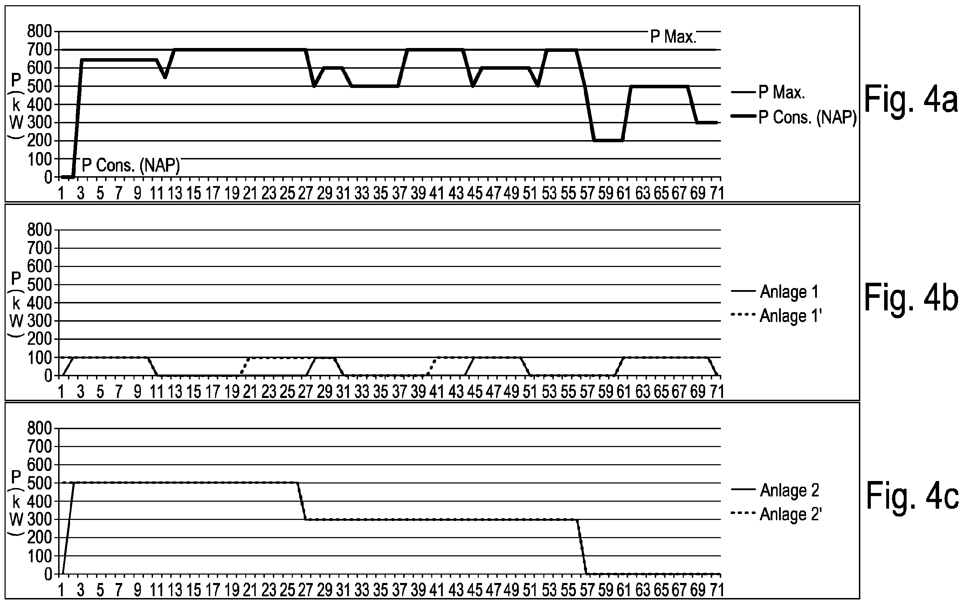

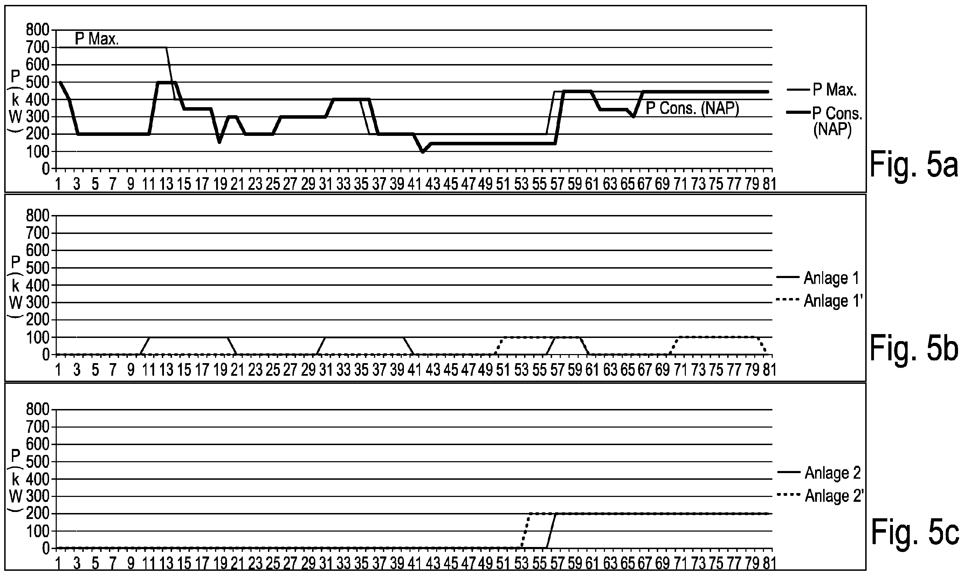

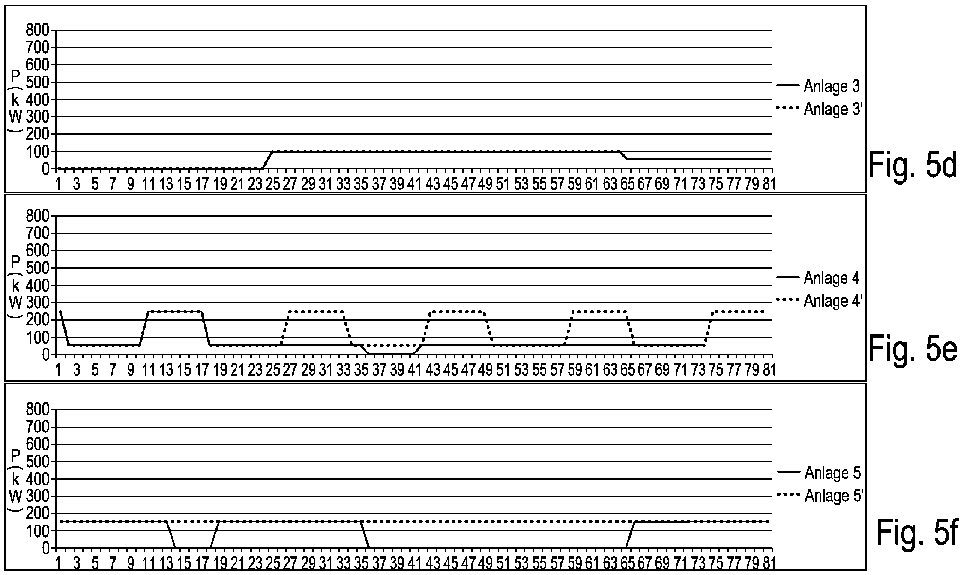

Figuren 4a bis 4f zeigen eine Situation wechselnder Bezugslasten und dazu mögliche Verläufe der Bezugsleistung. Die unterbrochenen Verläufe zeigen die Bezugsleistungen, die die jeweiligen Windenergieanlagen als Bedarf angemeldet hätten und die durchgezogenen Verläufe zeigen die Bezugsleistungen, die die jeweiligen Windenergieanlagen dann tatsächlich erhalten haben, also reservieren konnten. Diese Symbolik gilt für die Figuren 4a bis 4f und auch für die Figuren 5a bis 5f.

Es wird die Situation wechselnder Bezugslasten zugrunde gelegt und nachfolgend für die berücksichtigten Zeitpunkte beschrieben.

Das Beispiel betrifft einen Windpark mit 5 Windenergieanlagen (WEAs) im Bezugsleistungsmanagement. Die Priorität der Anlagen ist nach Anlagennummern verteilt (Anlage 1=> höchste Priorität bis zu Anlage 5 mit niedrigster Priorität).

Ein fester maximaler Sollbezug von 700 kW wird zugrunde gelegt, der hier die Entnahmeleistung beschreibt, die nämlich, bspw. vertraglich bedingt, festgelegt ist, zumindest nicht ohne weiteres überschritten werden darf oder sollte. Etwaige weitere im Park verfügbare Parkleistung wird hier nicht betrachtet bzw. ist nicht vorhanden. Diese feste Entnahmeleistung ist in Figur 4a als P Max. eingezeichnet.

Minute 2: Anlage 1 fordert 100kW und Anlage 2 500kW, sie reservieren diese Leistungen somit jeweils als Bezugsleistung und nehmen diese Leistungen auch ab, was nachfolgend, auch zu den noch folgenden Figuren 5a bis 5f vorausgesetzt wird. Anlage 4 benötigt 250kW. kann aber mit 50kW einen Teilbedarf decken, reserviert also nur 50 kW Bezugsleistung. Anlage 5 Benötigt 150kW, kann diesen Bedarf aber nicht mehr decken, reserviert also keine Bezugsleistung. Der Gesamtbezug des exemplarischen Windparks, der auch in Figur 4a und auch in Figur 5a als P Cons.(NAP) bezeichnet wird, beträgt 650kW. Diese Leistung wird Parkbezugsleistung genannt und bezeichnet die Leistung, die die Gruppe der Windenergieanalgen, hier also der Windenergieanalgen 1 bis 5, aktuell aus dem elektrischen Versorgungsnetz entnimmt.

Minute 8: Anlage 4 geht auf 50kW des benötigten Bedarfs zurück. Keine Änderung im Gesamtbezug.

Minute 11: Anlage 1 fordert 0kW Leistung. 100kW Leistung wird frei und Anlage 5 Kann Forderung von 150kW umsetzen, also reservieren. 700kW Gesamtbezug ergibt sich somit.

Minute 13: Anlage 4 fordert 250kW, hat aber nur weiterhin 50kW reservierten Bezug. Weiterhin ergibt sich 700 kW Gesamtbezug.

Minute 19: Anlage 4 geht auf 50kW des benötigten Bedarfs zurück. Keine Änderung im Gesamtbezug.

Minute 21: Anlage 1 fordert 100kW, bekommt sie nicht da nichts frei ist. Keine Änderung im Gesamtbezug.

Minute 25: Anlage 4 fordert 250kW, hat aber nur weiterhin 50kW reservierten Bezug. Weiterhin 700 kW Gesamtbezug.

Minute 27: Anlage 2 gibt 200kW frei. Der Gesamtbezug reduziert sich auf 500 kW. Diese Leistung wird nicht an die Folgeanlagen in der Abfragereihenfolge vergeben wie z.B. an Anlage 4 mit den Bedarf von 250kW. Erst in der nächsten Minute, also im nächsten Zyklus, wird diese Leistung wieder zur Verfügung gestellt. Insoweit stehen die gezeigten und erläuterten Minuten auch veranschaulichend für Zyklen, die auch andere Zeiten als eine Minute betragen können. Dies gilt auch für die Figuren 5a bis 5f.

Abbildung der Priorität: Anlagen vorne in der Abfragereihenfolge haben die höhere Priorität.

Minute 28: Anlage 1 übernimmt 100kW. Gesamtbezug 600KkW.

Minute 31: Anlage 1 fordert 0kW Leistung. Gesamtbezug 500kW.

Minute 32: Anlage 4 geht auf 50kW des benötigten Bedarfs zurück. Keine Änderung im Gesamtbezug. Anlage 4 fordert 250kW, hat aber nur weiterhin 50kW reservierten Bezug. Weiterhin 700 kW Gesamtbezug.

Minute 37: Anlage 4 fordert und übernimmt 250kW. Gesamtbezug 700kW.

Minute 41: Anlage 1 fordert 100kW bekommt sie aber nicht.

Minute 44: Anlage 4 geht auf 50kW des benötigten Bedarfs zurück. 200kW Bezugsleistung werden frei. Gesamtbezug 500kW.

Minute 45: Anlage 1 übernimmt 100kW aus der freigewordenen Leistung. Gesamtbezug 600kW.

Minute 49: Anlage 4 fordert 250kW, hat aber nur weiterhin 50kW reservierten Bezug. Weiterhin 600 kW Gesamtbezug.

Minute 51: Anlage 1 fordert 0kW Leistung. Gesamtbezug 500kW.

Minute 52: Anlage 4 fordert und übernimmt 250kW. Gesamtbezug 700kW.

Minute 57: Anlage 2 gibt weiter 300kW frei. Gesamtbezug zwischen 200 und 500kW. Alle Anlagen können ihren Bedarf decken.

In den Figuren 5a bis 5f wird die Situation wechselnder Bezugslasten mit wechselndem, maximalem Sollbezug, also wechselnder, vereinbarter Entnahmeleistung bzw. wechselnder Parkverbrauchsleistung, zugrunde gelegt und nachfolgend für die berücksichtigten Zeitpunkte beschrieben. Diese wechselnde Entnahmeleistung ist in Figur 5a als P Max. eingezeichnet.

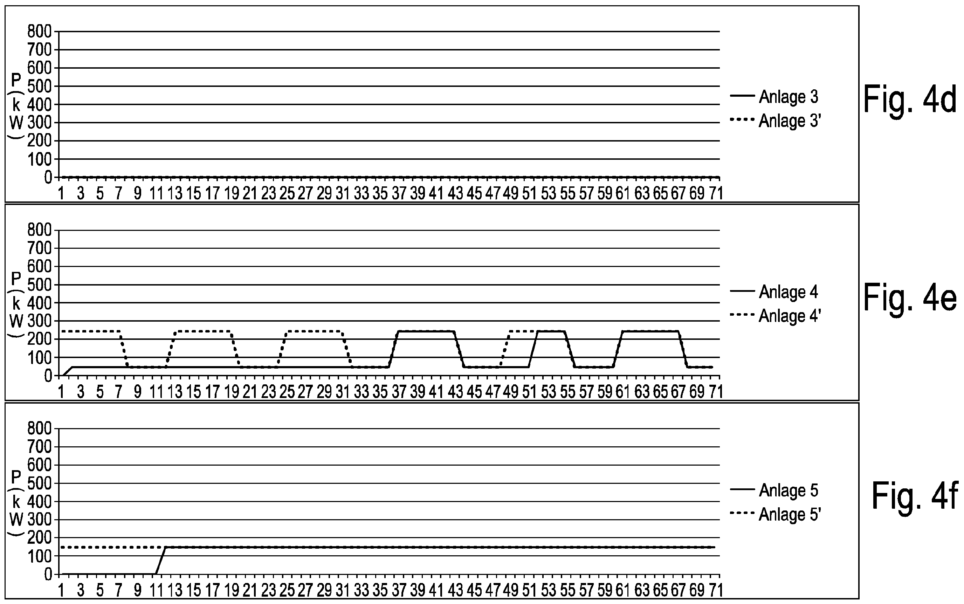

Das Beispiel betrifft, wie bei den Figuren 4, einen Windpark mit 5 Windenergieanlagen im Bezugsleistungsmanagement.

Die Priorität der Anlagen ist nach Anlagennummern verteilt (Anlage 1=> höchste Priorität).

Minute 2: Anlage 2 und Anlage 5 sind im Bezug mit 200kW Gesamtbezug, also 200 kW Parkbezugsleistung.

Minute 11: Anlage 2 übernimmt 250 kW Bezugsleistung. 500 kW beträgt der Gesamtbezug bzw. die Parkbezugsleistung, nämlich die Leistung, die alle 5 Windenergieanlagen in diesem Moment in Summe als Bezugsleistung beziehen.

Minute 14: Die Sollbezugsleistung, also die vereinbarte Entnahmeleistung wird auf 400kW gesenkt. Ein negativer Soll/Istvergleich (nicht genügend Bezugsleistung mehr vorhanden) sorgt dafür, dass Anlagen den Konsum von Energie einstellen müssen. Bedingt durch die Priorisierung werden die Anlagen in umgekehrter Reihenfolge abgefragt. Die freiwerdende Bezugsleistung der Anlagen wird, bedingt durch den negativen Soll/Istvergleich, sofort in die verfügbare Energie der jeweiligen nächsten Anlage mit einbezogen, um unnötige Abschaltungen zu vermeiden.

Anlage 5, die mit der niedrigsten Priorität, stellt den Energiekonsum sofort ein. 350kW Gesamtbezug sind das Resultat.

Minute 18: Anlage 4 geht auf 50kW des benötigten Bedarfs zurück. 200kW Bezugsleistung werden frei. Anlage 5 kann wieder 150kW übernehmen, aber erst im nächsten Zyklus, bei Minute 19. Der Gesamtbezug beträgt dann 300kW.

Minute 21: Anlage 1 fordert 0kW Leistung. Gesamtbezug 200kW.

Minute 25: Anlage 3 fordert 100kW Leistung. Gesamtbezug 300kW.

Minute 31: Anlage 1 fordert 100kW Leistung. Gesamtbezug 400kW (Maximum).

Minute 36: Die Sollbezugsleistung wird auf 200kW gesenkt. Prioritätenbedingt gehen Anlage 5 + 4 auf 0kW. Gesamtbezug 200kW.

Minute 41: Anlage 1 fordert 0kW Leistung. Anlage 4 übernimmt 50 kW Leistung. Gesamtbezug 150kW.

Minute 54: Anlage 2 forciert 200kW Leistung, bekommt sie aber nicht, da nur noch 50 kW Bezugsleistung übrig sind.

Minute 57: Die Sollbezugsleistung, also die vereinbarte Entnahmeleistung, wird auf 450kW erhöht. Anlage 1 übernimmt 100kW und Anlage 2 200kW. Gesamtbezug 450kW.

Minute 61: Anlage 1 fordert 0kW Leistung. Gesamtbezug 350kW.

Minute 65: Anlage 3 reduziert den Konsum auf 50kW. Anlage 5 übernimmt 150kW. Gesamtbezug 450kW.

Zusammenfassend kann zumindest vereinfachend und beispielhaft folgendes erläutert werden.

Die Bezugsleistung wird nach Priorität (Reihenfolge der Abfrage) an die jeweiligen Anlagen verteilt. Hat eine Anlage Bezugsleistung reserviert, behält die Anlage diese bis sie diesen Bezug nicht mehr benötigt. Eine zeitliche Priorisierung ist somit gegeben. Die Anlage die den Bedarf als erstes anmeldet bekommt die Bezugsleistung zugeteilt. Melden mehrere Anlagen zum selben Zeitpunkt Bezugsleistung an, entscheidet die Reihenfolge der Anrufe an die Anlagen über die Priorisierung. Somit wird sichergestellt, dass freigegebene Leistung geordnete nach Priorität verteilt wird.

Wird mehr Leistung bezogen als reserviert, muss reservierte Bezugsleistung von den Anlagen weggenommen werden. Dieses ist der Fall wenn die Sollbezugsleistung kleiner wird. Bei dieser Ausnahme wird die Zwangsrücknahme der Bezugsleistung nach der Prioritätenliste durchgeführt. Anlagen mit der niedrigeren Priorität müssen ihre Leistung als erstes abgeben.

**Patentansprüche**

1. Verfahren zum Steuern eines Leistungsverbrauchs einer Gruppe mehrerer Windenergieanlagen (100), wobei die Windenergieanlagen (100) zum Einspeisen elektrischer Energie in ein elektrisches Versorgungsnetz (120) vorbereitet sind, wobei das Verfahren **dadurch gekennzeichnet ist, dass**

   - in einem wiederkehrenden Zyklus
   - den Windenergieanlagen (100)
   - in einer vorgegebenen Reihenfolge
   - sukzessive und
   - abhängig von einer insgesamt den Windenergieanlagen (100) zum Verbrauch zur Verfügung stehenden Parkverbrauchsleistung
   - jeweils eine Angebotsleistung zum Verbrauch angeboten wird und
   - die jeweilige Windenergieanlage (100) diese oder eine geringere Angebotsleistung als Bezugsleistung reserviert, und
   - nachfolgenden Windenergieanlagen (100) in dem Zyklus maximal die um die bereits reservierten Bezugsleistungen reduzierte Parkverbrauchsleistung als Angebotsleistung angeboten wird.

2. Verfahren nach Anspruch 1,
   **dadurch gekennzeichnet, dass**
   die Gruppe mehrerer Windenergieanlagen (100) einen Windpark (112) oder einen Teil davon bildet.

3. Verfahren nach Anspruch 1 oder 2,
   **dadurch gekennzeichnet, dass**
   die Parkverbrauchsleistung bestimmt wird aus der Summe

   - einer vorbestimmten, aus dem elektrischen Versorgungsnetz (120) zu entnehmenden Entnahmeleistung (P_max) und
   - einer innerhalb des Windparks (112) oder der Gruppe der Windenergieanlagen (100) durch Erzeugung und/oder aus Speichern verfügbaren Parkleistung (P_park).

4. Verfahren nach einem der vorstehenden Ansprüche,
   **dadurch gekennzeichnet, dass** im aktuellen Zyklus

   - die der jeweiligen Windenergieanlage (100) angebotene Angebotsleistung aus
   - einer aktuellen, verfügbaren Bezugsleistung zuzüglich
   - der von dieser Windenergieanlage im vorigen Zyklus reservierten Bezugsleistung berechnet wird.

5. Verfahren nach Anspruch 4,
   **dadurch gekennzeichnet, dass**

   - die verfügbare Bezugsleistung für die erste Windenergieanlage (100) der vorgegebenen Reihenfolge berechnet wird aus
   - der Parkverbrauchsleistung
   - abzüglich einer aktuellen Parkbezugsleistung, die von der Gruppe aktuell aus dem elektrischen Versorgungsnetz (120) entnommen wird, oder abzüglich der Summe der reservierten Bezugsleistungen der Gruppe.

6. Verfahren nach Anspruch 4 oder 5,
   **dadurch gekennzeichnet, dass**

   - sich die verfügbare Bezugsleistung einer nachfolgenden Windenergieanlage (100) aus der verfügbaren Bezugsleistung ihrer in der vorgegebenen Reihenfolge vorstehenden Windenergieanlage (100) ergibt und dass
   - sich die verfügbare Bezugsleistung für eine nachfolgende Windenergieanlage (100) reduziert, wenn die aktuelle Windenergieanlage (100) ihre reservierte Bezugsleistung gegenüber dem vorigen Zyklus erhöht,
   - insbesondere reduziert sich die verfügbare Bezugsleistung für die nachfolgende Windenergieanlage (100) um den Wert um den sich diese reservierte Bezugsleistung erhöht hat, und dass
   - die verfügbare Bezugsleistung für die nachfolgende Windenergieanlage (100) unverändert bleibt, wenn die aktuelle Windenergieanlage ihre reservierte Bezugsleistung gegenüber dem vorigen Zyklus beibehält oder reduziert hat.

7. Verfahren nach einem der vorstehenden Ansprüche, **dadurch gekennzeichnet, dass** die vorgegebene Reihenfolge in Abhängigkeit einer oder mehrerer Randbedingungen, insbesondere Umgebungsbedingungen bestimmt oder verändert wird.

8. Verfahren nach einem der vorstehenden Ansprüche, **dadurch gekennzeichnet, dass** die aus dem elektrischen Versorgungsnetz (120) zu entnehmende Entnahmeleistung auf einen Wert festgesetzt wird, der der Summe aller möglichen Verbrauchsleistungen der Windenergieanlage (100) der Gruppe entspricht, die die größte Summe aller möglichen Verbrauchsleistungen aufweist.

9. Verfahren nach einem der vorstehenden Ansprüche, **dadurch gekennzeichnet, dass** die reservierte Bezugsleistung wenigstens einer der Windenergieanlagen (100) reduziert wird, wenn die Summe der reservierten Leistungen des vorigen Zyklus größer ist als die Parkverbrauchsleistung.

10. Verfahren nach einem der vorstehenden Ansprüche, **dadurch gekennzeichnet, dass** der Zyklus entgegengesetzt der vorgegebenen Reihenfolge durchlaufen wird, wenn reservierte Bezugsleistungen reduziert werden sollen, insbesondere wenn die Summe der reservierten Bezugsleistungen die Parkverbrauchsleistung übersteigt.

11. Verfahren nach Anspruch 10, **dadurch gekennzeichnet, dass** zunächst die reservierte Bezugsleistung der letzten Windenergieanlagen reduziert wird und sukzessive die reservierte Bezugsleistung weiterer Windenergieanlagen entgegengesetzt der vorgegebenen Reihenfolge reduziert wird, bis die Summe der reservierten Bezugsleistungen die Parkverbrauchsleistung überschreit.

12. Verfahren nach einem der vorstehenden Ansprüche, **dadurch gekennzeichnet, dass** die Windenergieanlagen die jeweils reservierte Bezugsleistung zum Beheizen ihrer Rotorblätter und/oder Beheizen ihres Generators und/oder zum Starten der Windenergieanlage verwenden.

13. Verfahren nach einem der vorstehenden Ansprüche, **dadurch gekennzeichnet, dass**

- der Zyklus in einem Zeitbereich von einer halben Minute bis 5 Minuten, vorzugsweise in einem Zeitbereich von einer bis 3 Minuten und insbesondere etwa jede Minute wiederholt wird und/oder
- der Zyklus manuell unterbrochen werden kann und eine Vergabe der Bezugsleistungen für jede Windenergieanlage manuell erfolgen kann.

14. Verfahren nach einem der vorstehenden Ansprüche, **dadurch gekennzeichnet, dass** wenigstens eine der reservierten Bezugsleistungen, insbesondere alle reservierten Bezugsleistungen der Windenergieanlagen der Gruppe und/oder die Parkverbrauchsleistung und/oder die aktuelle Parkbezugsleistung für eine vorbestimmte Übergangszeit unverändert bleiben, wenn zwischen den Windenergieanlagen der Gruppe, insbesondere in dem Windpark, eine Kommunikationsstörung auftritt.

15. Gruppe mehrerer Windenergieanlagen, insbesondere Windpark (112), dazu vorbereitet, ein Verfahren nach einem der vorstehenden Ansprüche durchzuführen.

16. Gruppe nach Anspruch 15, **dadurch gekennzeichnet, dass** zum Ausführen des Verfahrens eine zentrale Steuereinheit, insbesondere eine Parksteuereinheit (FCU), vorhanden ist.

## Claims

1. A method for controlling a power consumption of a group of a plurality of wind turbines (100), wherein the wind turbines (100) are prepared for feeding electrical energy into an electrical supply network (120), , wherein the method is **characterized in that**

    - an energy supply is offered for consumption,
    - to the wind turbines (100)
    - in a recurring cycle,
    - in a predetermined order,
    - successively, and
    - as a function of the entire amount of power available to the wind park that is available to the wind turbines (100) for consumption, and wherein
    - the respective wind turbine (100) reserves this or a lesser energy supply as a reference power, and
    - subsequent wind turbines (100) in the cycle are provided with, at most, the power available to the wind park, minus the reference power already reserved, as an energy supply.

2. The method according to Claim 1, **characterized in that** the group of a plurality of wind turbines (100) forms a wind park (112) or a part thereof.

3. The method according to Claim 1 or 2, **characterized in that** the power available to the wind park is determined from the sum of:

> - a predetermined withdrawal capacity (P_max) that can be withdrawn from the electrical supply network (120) and
> - a wind park output (P_park) of the wind park (112) or the group of wind turbines (100) that is offered by means of generation and/or by means of accumulation.

4. The method according to one of the above claims, **characterized in that**, during the current cycle,

> - the energy supply offered to the respective wind turbine (100) is calculated from:
> - a currently available reference power plus
> - the reference power reserved by this wind turbine during the preceding cycle.

5. The method according to Claim 4, **characterized in that**

> - the available reference power is calculated for the first wind turbine (100) of the predetermined order from
> - the power available to the wind park
> - minus a current reference power for the wind park, which is currently being drawn from the electrical supply network (120) by the group, or minus the total reference power reserved for the group.

6. The method according to Claim 4 or 5, **characterized in that**

> - the available reference power of a subsequent wind turbine (100) arises from the available reference power of the preceding wind turbine (100) in the predetermined order, and **in that**
> - the available reference power is reduced for a subsequent wind turbine (100) if the current wind turbine (100) increases its reserved reference power as compared to the preceding cycle,
> - in particular, the available reference power is reduced for the subsequent wind turbine (100) by the value by which this reserved reference power was increased, and **in that**
> - the available reference power for the subsequent wind turbine (100) remains unmodified if the current wind turbine retains or reduces its reserved reference power as compared to the preceding cycle.

7. The method according to one of the above claims, **characterized in that** the predetermined order is determined or modified as a function of one or a plurality of boundary conditions, in particular environmental conditions.

8. The method according to one of the above claims, **characterized in that** the withdrawal capacity that is to be withdrawn from the electrical supply network (120) be based on a value that corresponds to the sum of all possible power usages by the wind turbine (100) of the group, corresponding to the greatest sum of all possible power usages.

9. The method according to one of the above claims, **characterized in that** the reserved reference power of at least one of the wind turbines (100) is reduced if the sum of the reserved power from the preceding cycle is greater than the power available to the wind park.

10. The method according to one of the above claims, **characterized in that** cycle is run contrary to the predefined order when reserved quantities of reference power are to be reduced, in particular when the total of the reserved reference power exceeds the power available to the wind park.

11. The method according to Claim 10, **characterized in that** the reserved reference power of the last wind turbines is initially reduced and the reserved reference power of additional wind turbines are successively reduced contrary to the predetermined order until the total of the reserved quantities of reference power exceeds the power available to the wind park.

12. The method according to one of the above claims, **characterized in that** the wind turbines use the respective, reserved reference power to heat their rotor blades and/or to heat their generator and/or to start the wind turbine.

13. The method according to one of the above claims, **characterized in that**

> - the cycle can be repeated in a time range of a half minute to 5 minutes, preferably in a time range of one to 3 minutes, and in particular approximately every minute and/or
> - the cycle can be manually interrupted and the reference power can be manually assigned to each wind turbine.

14. The method according to one of the above claims, **characterized in that** at least one reserved reference power, in particular all reserved quantities of reference power of the wind turbines of the group and/or the power available to the wind park and/or the current reference power for the wind park for a predetermined transition period remain unmodified if a communication failure occurs between the wind turbines of the group, in particular in the wind park.

**15.** A group of a plurality of wind turbines, in particular a wind park (112), prepared to implement a method according to one of the preceding Claims.

**16.** The group according to Claim 15, **characterized in that** a central control unit, in particular a farm control unit (FCU), is available for carrying out the method.


**Revendications**

**1.** Procédé de commande d'une consommation de puissance d'un groupe de plusieurs éoliennes (100), dans lequel les éoliennes (100) sont préparées pour l'injection d'énergie électrique dans un réseau d'alimentation électrique (120), dans lequel le procédé est **caractérisé en ce que**

- dans un cycle répétitif
- est offerte aux éoliennes (100)
- dans une séquence prédéfinie
- successivement et
- en fonction d'une puissance de consommation du parc globalement à la disposition des éoliennes (100) en vue de la consommation
- respectivement une puissance d'offre destinée à la consommation et
- l'éolienne (100) respective réserve ladite puissance d'offre ou une puissance d'offre inférieure comme puissance de référence, et
- est offerte comme puissance d'offre à des éoliennes suivantes (100) du cycle au maximum la puissance de consommation du parc réduite des puissances de référence déjà réservées.

**2.** Procédé selon la revendication 1, **caractérisé en ce que** le groupe de plusieurs éoliennes (100) forme un parc éolien (112) ou une partie de celui-ci.

**3.** Procédé selon la revendication 1 ou 2, **caractérisé en ce que** la puissance de consommation du parc est déterminée à partir de la somme

- d'une puissance de prélèvement prédéterminée (P_max) à prélever du réseau d'alimentation électrique (120) et
- d'une puissance de parc (P_park) disponible à l'intérieur du parc éolien (112) ou du groupe des éoliennes (100) par la production et/ou le stockage.

**4.** Procédé selon l'une des revendications précédentes, **caractérisé en ce que** dans le cycle actuel

- la puissance de l'offre offerte à l'éolienne respective (100) est calculée à partir
- d'une puissance de référence disponible actuelle, plus
- la puissance de référence réservée par ladite éolienne lors du cycle précédent.

**5.** Procédé selon la revendication 4, **caractérisé en ce que**

- la puissance de référence disponible pour la première éolienne (100) de la séquence prédéfinie est calculée à partir de
- la puissance de consommation du parc
- moins une puissance de référence du parc actuelle, qui est prélevée actuellement par le groupe du réseau d'alimentation électrique (120), ou moins la somme des puissances de référence réservées du groupe.

**6.** Procédé selon la revendication 4 ou 5, **caractérisé en ce que**

- la puissance de référence disponible d'une éolienne suivante (100) résulte de la puissance de référence disponible de l'éolienne (100) qui la précède dans la séquence prédéfinie et **en ce que**
- la puissance de référence disponible pour une éolienne suivante (100) se réduit lorsque l'éolienne actuelle (100) augmente sa puissance de référence réservée par rapport au cycle précédent,
- la puissance de référence disponible pour l'éolienne suivante (100) se réduit en particulier de la valeur à hauteur de laquelle ladite puissance de référence réservée a augmenté, et **en ce que**
- la puissance de référence disponible pour l'éolienne suivante (100) reste inchangée lorsque l'éolienne actuelle a conservé ou réduit sa puissance de référence réservée par rapport au cycle précédent.

**7.** Procédé selon l'une des revendications précédentes, **caractérisé en ce que** la séquence prédéfinie est déterminée ou modifiée en fonction d'une ou de plusieurs conditions limites, en particulier de conditions environnementales.

**8.** Procédé selon l'une des revendications précédentes,
**caractérisé en ce que**
la puissance de prélèvement à prélever du réseau d'alimentation électrique (120) est fixée à une valeur qui correspond à la somme de toutes les puissances de consommation possibles de l'éolienne (100) du groupe qui présente la somme la plus importante de toutes les puissances de consommation possibles.

**9.** Procédé selon l'une des revendications précédentes,
**caractérisé en ce que**
la puissance de référence réservée d'au moins une des éoliennes (100) est réduite lorsque la somme des puissances réservées du cycle précédent est supérieure à la puissance de consommation du parc.

**10.** Procédé selon l'une des revendications précédentes,
**caractérisé en ce que** le cycle est parcouru dans le sens inverse de la séquence prédéfinie lorsque des puissances de référence réservées doivent être réduites, en particulier lorsque la somme des puissances de référence réservées dépasse la puissance de consommation du parc.

**11.** Procédé selon la revendication 10,
**caractérisé en ce que**
la puissance de référence réservée des dernières éoliennes est d'abord réduite et successivement la puissance de référence réservée d'autres éoliennes est réduite dans le sens inverse de la séquence prédéfinie, jusqu'à ce que la somme des puissances de référence réservées dépasse la puissance de consommation du parc.

**12.** Procédé selon l'une des revendications précédentes,
**caractérisé en ce que** les éoliennes utilisent la puissance de référence respectivement réservée pour chauffer leurs pales de rotor et/ou pour chauffer leur générateur et/ou pour démarrer l'éolienne.

**13.** Procédé selon l'une des revendications précédentes,
**caractérisé en ce que**

- le cycle est répété dans une plage de temps d'une demi-minute à 5 minutes, de préférence dans une plage de temps d'une à 3 minutes et en particulier environ chaque minute et/ou
- le cycle peut être interrompu manuellement et une attribution des puissances de référence pour chaque éolienne peut avoir lieu manuellement.

**14.** Procédé selon l'une des revendications précédentes,
**caractérisé en ce que**
au moins une des puissances de référence réservées, en particulier toutes les puissances de référence réservées des éoliennes du groupe et/ou la puissance de consommation du parc et/ou la puissance de référence du parc actuelle restent inchangées pour une période de transition prédéterminée lorsque survient une perturbation des communications entre les éoliennes du groupe, en particulier dans le parc éolien.

**15.** Groupe de plusieurs éoliennes, en particulier parc éolien (112), préparé pour exécuter un procédé selon l'une des revendications précédentes.

**16.** Groupe selon la revendication 15,
**caractérisé en ce qu'**une unité de commande centrale, en particulier une unité de commande de parc (FCU), est présente pour la réalisation du procédé.

Fig. 1

Fig. 2

EP 3 047 554 B1

Rückforderung

Timeout Zyklus ——1

Pact ← Messung

Ppos = Pmax - Pact ——11
Ppos < 0   Ppos >= 0

Ppos + Pwea1cons(t-1) → WEA 1

Pwea1cons(t)

24
Ppos += ΔP

23

ΔP <= 0      ΔP > 0
ΔP= Pwea2cons(t-1) - Pwea2cons(t)

ΔP = Pwea1cons(t) - Pwea1cons(t-1) ——21
ΔP <= 0      ΔP > 0

Ppos -= ΔP ——22

Ppos + Pwea2cons(t-1) → WEA 2

Pwea2cons(t)

Ppos += ΔP

33

ΔP <= 0      ΔP > 0
ΔP= PweaXcons(t-1) - PweaXcons(t)

ΔP = Pwea2cons(t) - Pwea2cons(t-1) ——31
ΔP <= 0      ΔP > 0

Ppos -= ΔP ——32

Ppos + PweaXcons(t-1) → WEA X

PweaXcons(t)

Fig. 3

Fig. 4a

Fig. 4b

Fig. 4c

EP 3 047 554 B1

Fig. 4d

Fig. 4e

Fig. 4f

EP 3 047 554 B1

Fig. 5a

Fig. 5b

Fig. 5c

EP 3 047 554 B1

Fig. 5d

Fig. 5e

Fig. 5f

**IN DER BESCHREIBUNG AUFGEFÜHRTE DOKUMENTE**

**In der Beschreibung aufgeführte Patentdokumente**

- EP 2166225 W
- DE 19502786 A1
- DE 19842043 A1
- EP 2166225 A1